# EUROPEAN PATENT APPLICATION

(11) **EP 4 838 554 A1**
(43) Date of publication of application: **11.11.2026**
(21) Application number: 26175932.8
(22) Date of filing: 30.04.2026
(51) Int. Cl.: H01H 85/00, H01H 39/00, H01H 85/048

(54) **FUSE MODULE PROVIDING COMPLETE GALVANIC SEPARATION**

(30) Priority: 06.05.2025 US 202563800561 P
(71) Applicant: Littelfuse, Inc., Rosemont, Illinois 60018 (US)
(72) Inventor: Pineda, Martin G., Rosemont 60018 (US); Godinez, Sergio Fuentes, Rosemont 60018 (US); Johler, Werner, Rosemont 60018 (US); Urrea, Julio, Rosemont 60018 (US)
(74) Representative: Arnold & Siedsma

(57) **Abstract**

A fuse module electrically connected between a first terminal and a second terminal can include a main fuse element, a PPTC fuse connected in parallel with the main fuse element, and a secondary fuse element connected in series with the PPTC fuse. Current can flow through the main fuse element during normal operating conditions. During overcurrent conditions, the main fuse element can open, and the current can flow through the PPTC fuse. When the PPTC fuse reaches a predetermined temperature, heat from the PPTC fuse can melt the secondary fuse element, causing the secondary fuse element to open and provide a complete galvanic separation between the first terminal and the second terminal. The predetermined temperature of the PPTC fuse at which the secondary fuse opens can be a trip temperature of the PPTC fuse.

## Description

### FIELD

The present application claims priority to U.S. Provisional Application Serial No. 63/800,561, entitled " FUSE MODULE WITH A PYRO FUSE AND A THERMALLY PROTECTED PPTC FUSE ELEMENT PROVIDING COMPLETE GALVANIC SEPARATION " filed May 6, 2025.

The present disclosure generally relates to circuit protection devices. More particularly, the present disclosure relates to a fuse module that includes both a pyrotechnic fuse and a thermally protected polymeric positive temperature coefficient (PPTC) fuse that provides complete galvanic separation.

### BACKGROUND

Fuses are commonly implemented in electrical systems for providing overcurrent protection. For example, some fuse modules include fuses that can be passively or actively opened. Some fuse modules also provide multiple paths for current flow. However, obtaining complete galvanic separation remains challenging in known fuse modules.

In view of the above, there is a continuing, ongoing need for improved fuse modules.

### BRIEF SUMMARY

This Brief Summary is provided to introduce a selection of concepts in a simplified form that are further described below in the Detailed Description. This Brief Summary is not intended to identify key features or essential features of claimed subject matter or intended as an aid in determining scope of the claimed subject matter.

A fuse module can include a main fuse element, a PPTC fuse connected in parallel with the main fuse element, and a secondary fuse element connected in series with the PPTC fuse, wherein current can flow through the main fuse element during normal operating conditions, wherein the main fuse element can opens and the current can flow through the PPTC fuse during overcurrent conditions until the PPTC fuse reaches a trip temperature, and wherein the secondary fuse element can open when the PPTC fuse reaches the trip temperature.

The main fuse element can include a pyrotechnic fuse.

The secondary fuse element can include a thermal fuse.

The current can be diverted from the main fuse element to the PPTC fuse during the overcurrent conditions.

the current flowing through the PPTC fuse can increase an operating temperature of the PPTC fuse, a resistance of the PPTC fuse can increases in a linear fashion as the operating temperature of the PPTC fuse increases below the trip temperature, and the resistance of the PPTC fuse can increase in a non-linear fashion when the operating temperature of the PPTC fuse reaches the trip temperature.

The resistance of the PPTC fuse can limit the current flowing therethrough when the operating temperature of the PPTC fuse reaches the trip temperature.

The current flowing through the PPTC fuse can increase an operating temperature of the PPTC fuse, and heat from the PPTC fuse can melt a heat-sensitive element in the secondary fuse element when the operating temperature of the PPTC fuse reaches the trip temperature.

The fuse module can include a first terminal electrically coupled to the main fuse element and the PPTC fuse and a second terminal electrically coupled to the main fuse element and the secondary fuse element, wherein the secondary fuse element opening can provide a complete galvanic separation between the first terminal and the second terminal.

A fuse module can include a main fuse element, a PPTC fuse connected in parallel with the main fuse element, and a secondary fuse element connected in series with the PPTC fuse, wherein current can flow through the main fuse element during normal operating conditions, wherein the main fuse element can open and the current can flow through the PPTC fuse during overcurrent conditions, and wherein the secondary fuse can open when the PPTC fuse reaches a predetermined temperature.

The current can be diverted from the main fuse element to the PPTC fuse during the overcurrent conditions.

The current flowing through the PPTC fuse can increase an operating temperature of the PPTC fuse, a resistance of the PPTC fuse can increase in a linear fashion as the operating temperature of the PPTC fuse increases below a trip temperature, and the resistance of the PPTC fuse can increase in a non-linear fashion when the operating temperature of the PPTC fuse reaches the trip temperature.

The resistance of the PPTC fuse can limit the current flowing therethrough when the operating temperature of the PPTC fuse reaches the trip temperature.

The current flowing through the PPTC fuse can increase an operating temperature of the PPTC fuse, and heat from the PPTC fuse can melt a heat-sensitive element in the secondary fuse element when the operating temperature of the PPTC fuse reaches the predetermined temperature.

The fuse module can include a first terminal electrically coupled to the main fuse element and the PPTC fuse and a second terminal electrically coupled to the main fuse element and the secondary fuse element, wherein the secondary fuse element opening can provide a complete galvanic separation between the first terminal and the second terminal.

A method can include flowing current through a main fuse element between a first terminal and a second terminal during normal operating conditions, opening the main fuse element during overcurrent conditions, flowing the current through a PPTC fuse connected in parallel with the main fuse element between the first terminal and the second terminal during the overcurrent conditions, and opening a secondary fuse element connected in series with the PPTC fuse when the PPTC fuse reaches a predetermined temperature to provide a complete galvanic separation between the first terminal and the second terminal.

The method can include diverting the current from the main fuse element to the PPTC fuse during the overcurrent conditions.

The method can include increasing an operating temperature of the PPTC fuse as the current flows therethrough, increasing a resistance of the PPTC fuse in a linear fashion as the operating temperature of the PPTC fuse increases below a trip temperature, and increasing the resistance of the PPTC fuse in a non-linear fashion when the operating temperature of the PPTC fuse reaches the trip temperature.

The method can include limiting the current flowing through the PPTC fuse when the operating temperature of the PPTC fuse reaches the trip temperature.

The method can include melting a heat-sensitive element in the secondary fuse element with heat from the PPTC fuse when the operating temperature of the PPTC fuse reaches the predetermined temperature, wherein the predetermined temperature is the trip temperature.

The method can include increasing an operating temperature of the PPTC fuse as the current flows therethrough and melting a heat-sensitive element in the secondary fuse element with heat from the PPTC fuse when the operating temperature of the PPTC fuse reaches the predetermined temperature.

Other technical features may be readily apparent to one skilled in the art from the following figures, descriptions, and claims.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 is a schematic view illustrating a pyrotechnic fuse in accordance with the disclosure.
FIG. 2 is a schematic view illustrating a PPTC fuse and a thermal fuse in accordance with the disclosure.
FIG. 3A is a circuit diagram illustrating current flow in a fuse module in accordance with the disclosure.
FIG. 3B is a circuit diagram illustrating current flow in a fuse module in accordance with the disclosure.
FIG. 3C is a circuit diagram illustrating complete galvanic separation in a fuse module in accordance with the disclosure.
FIG. 4 is a flow diagram illustrating a method in accordance with the disclosure.

### DETAILED DESCRIPTION

A fuse module that can provide complete galvanic separation in accordance with the present disclosure will now be described more fully hereinafter with reference made to the accompanying drawings.

In accordance with the disclosure, a fuse module can be connected between a first terminal and a second terminal. The fuse module can include a main fuse element connected in parallel with a PPTC fuse and a secondary fuse element connected in series with the PPTC fuse.

During normal operating conditions, current can flow through the main fuse element. However, when overcurrent conditions exist, the main fuse element can open, thereby creating an arc voltage across the main fuse element. With the arc voltage appearing, the current can be diverted to the PPTC fuse. However, with the current flowing through the PPTC fuse, an operating temperature of the PPTC fuse can increase. When the operating temperature of the PPTC fuse reaches a predetermined temperature, heat from the PPTC fuse can cause the secondary fuse element to open, thereby creating a complete galvanic separation between the first terminal and the second terminal.

The PPTC fuse can enter a trip state when the operating temperature of the PPTC fuse reaches a trip temperature. For example, in the trip state, a resistance of the PPTC fuse can sharply increase, causing the current flowing through the PPTC fuse to sharply decrease. When the PPTC fuse is in the trip state, the PPTC fuse can limit the current flowing therethrough. The predetermined temperature of the PPTC fuse can be the trip temperature. That is, the heat from the PPTC fuse can cause the secondary fuse element to open when the operating temperature of the PPTC fuse reaches the trip temperature.

As disclosed herein, the fuse module can include the main fuse element, the PPTC fuse connected in parallel with the main fuse element, and the secondary fuse element connected in series with the PPTC fuse. The main fuse element can include or be part of a pyrotechnic fuse ("a pyro fuse").

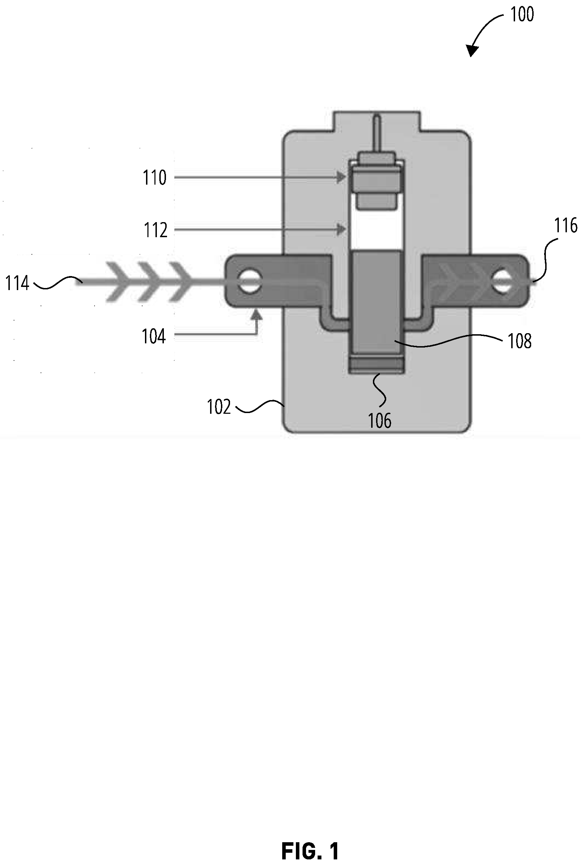

For example, FIG. 1 is a schematic view illustrating a pyrotechnic fuse 100 in accordance with the disclosure. It is to be understood that the pyrotechnic fuse 100 is exemplary only and that additional or alternative main fuse elements and/or pyrotechnic fuses are contemplated. For example, the main fuse element can include the fuse module shown and described in U.S. Patent No. 11,387,068.

As seen in FIG. 1, the pyrotechnic fuse 100 can include a housing 102 with a shaft 112 formed therein. A busbar 104 can be disposed within the housing 102 and extend through and outside of the housing 102, and the busbar 104 can include a fuse element 106 electrically connected with the busbar 104 so as to be at least partially disposed within the shaft 112. A moveable piston 108 and an initiator 110 can also be disposed within the shaft 112 with the piston 108 being disposed above the fuse element 106 and the initiator 110 being disposed above the piston 108. The initiator 110 can also be coupled to a controller (not shown).

In operation, current can flow from a lead 114 or a terminal to the busbar 104, through the busbar 104, including the fuse element 106, and from the busbar 104 to a lead 116 or a terminal. However, the current can be interrupted responsive to an occurrence of a predetermined event. In particular, upon the occurrence of the predetermined event, the controller can send an initiation signal to the initiator 110 to cause the initiator 110 to be detonated. A resultant increase in pressure within the shaft 112 can rapidly force the piston 108 in a downward direction within the shaft 112 and through the fuse element 106 to cut the fuse element 106, thereby separating the fuse element 106 from the busbar 104 and interrupting current flowing through the busbar 104. FIG. 1 illustrates the piston 108 after cutting through the fuse element 106 with the fuse element 106 being separated from the busbar 104.

As disclosed herein, the fuse module can include the main fuse element, the PPTC fuse connected in parallel with the main fuse element, and the secondary fuse element connected in series with the PPTC fuse. The secondary fuse element can include or be part of a thermal fuse.

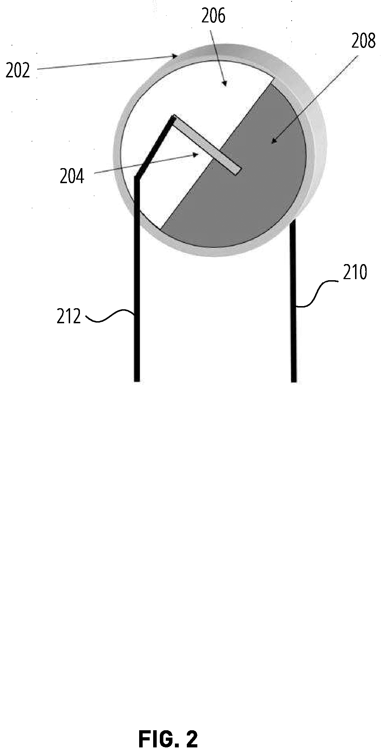

For example, FIG. 2 is a schematic view illustrating a PPTC fuse 202 and a thermal fuse 204 in accordance with the disclosure. It is to be understood that the PPTC fuse 202 and the thermal fuse 204 are exemplary only and that additional or alternative PPTC fuses and/or thermal fuses are contemplated, including their relative orientations, sizes, shapes, and positions relative to one another.

As seen in FIG. 2, the PPTC fuse 202 can be circular, ovular, or otherwise shaped so as to be disposed around a conductor, such as a conducting layer 208, and in electrical contact with the conducting layer 208. That is, the conducting layer 208 can be at least partially surrounded by the PPTC fuse 202. Furthermore, an insulator, such as an insulating layer 206, can be disposed on one side of the conducting layer 208 so as to electrically insulate, for example, by covering, at least part of the conducting layer 208. A thermal fuse 204 can be disposed on the side of the conducting layer 208 with the insulating layer 206 so that a first end of the thermal fuse 204 is coupled to and in electrical contact with the conducting layer 208 and a second end of the thermal fuse 204 is coupled to the insulating layer 206.

In operation, current can flow from a lead 210 or a terminal to the PPTC fuse 202, through the PPTC fuse 202, from the PPTC fuse 202 to the conducting layer 208, from the conducting layer 208 to the thermal fuse 204, through the thermal fuse 204, and from the thermal fuse 204 to a lead 210 or a terminal. However, the current can be interrupted responsive to a temperature increase that causes a resistance of the PPTC fuse 202 to increase and/or the thermal fuse 204 to melt, disintegrate, or otherwise open.

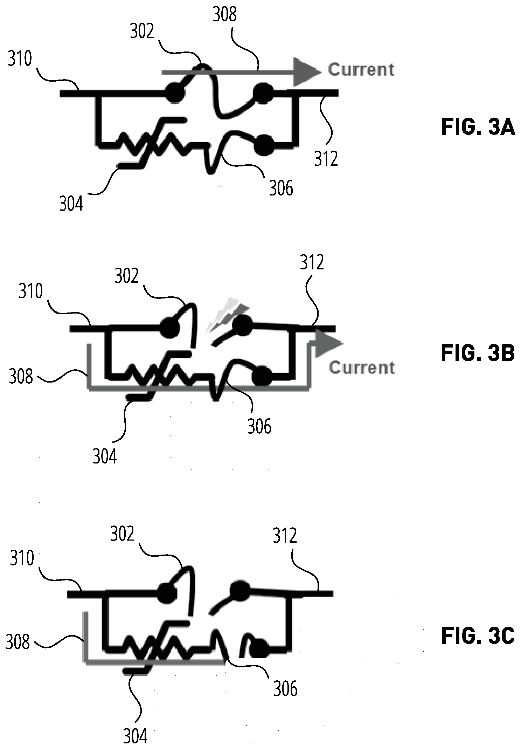

FIG. 3A, FIG. 3B, and FIG. 3C are circuit diagrams illustrating current flow in a fuse module in accordance with the disclosure. As seen FIG. 3A, FIG. 3B, and FIG. 3C and as disclosed herein, a PPTC fuse 304 can be connected in parallel with a main fuse element 302, and a secondary fuse element 306 can be connected in series with the PPTC fuse 304. For example, the main fuse element 302 can be the same as or similar to the pyrotechnic fuse 100. Additionally or alternative, the PPTC fuse 304 can be the same as or similar to the PPTC fuse 202, and the secondary fuse element 306 can be the same as or similar to the thermal fuse 204.

As also seen in FIG. 3A, FIG. 3B, and FIG. 3C, a first terminal 310 can be electrically coupled to the main fuse element 302 and the PPTC fuse 304, and a second terminal 312 can be electrically coupled to the main fuse element 302 and the secondary fuse element 306. As such, the fuse module can include the main fuse element 302, the PPTC fuse 304, and the secondary fuse element 306 coupled between the first terminal 310 and the second terminal 312.

FIG. 3A illustrates the current flow in the fuse module during normal operating conditions. As seen in FIG. 3A, current 308 can flow through the main fuse element 302 during the normal operating conditions. In particular, the current 308 can flow from the first terminal 310 to the main fuse element 302, through the main fuse element 302, and from the main fuse element 302 to the second terminal 312. The current 308 may not flow through either the PPTC fuse 304 or the secondary fuse element 306 during the normal operating conditions.

FIG. 3B illustrates the current flow in the fuse module during overcurrent conditions. As seen in FIG. 3B, the main fuse element 302 can open during the overcurrent conditions. For example, the piston 108 can cut the fuse element 106 to interrupt the current flow. When the main fuse element 302 opens during the overcurrent conditions, the current 308 can flow through the PPTC fuse 304 and the secondary fuse element 306. In particular, the current 308 can flow from the first terminal 310 to the PPTC fuse 304, through the PPTC fuse 304, from the PPTC fuse 304 to the secondary fuse element 306, through the secondary fuse element 306, and from the secondary fuse element 306 to the second terminal 312. As such, the current 308 can be diverted from the main fuse element 302 to the PPTC fuse 304 during the overcurrent conditions so as to not flow through the main fuse element 302 during the overcurrent conditions.

When the current 308 flows through the PPTC fuse 304 and the secondary fuse element 306, the current 308 can flow from the first terminal 310 to the second terminal 312. In this regard, the current 308 can flow freely through the PPTC fuse 304 during the overcurrent conditions when an operating temperature of the PPTC fuse 304 is below a trip temperature.

However, the current 308 flowing through the PPTC fuse 304 - both before and after the PPTC fuse 304 reaches the trip temperature - can cause the operating temperature of the PPTC fuse 304 to increase. A resistance of the PPTC fuse 304 can increase in a linear fashion as the operating temperature of the PPTC fuse 304 is below the trip temperature, but the resistance of the PPTC fuse 304 can increase in a non-linear fashion when the operating temperature of the PPTC fuse 304 is at and above the trip temperature. As such, at the trip temperature, the resistance of the PPTC fuse 304 can be sufficiently high so as to limit the current 308 flowing through the PPTC fuse 304.

Nevertheless, even when the PPTC fuse 304 limits the current 308 flowing therethrough, a small amount of the current 308 may continue to flow from the first terminal 310 to the second terminal 312 via the PPTC fuse 304 and the secondary fuse element 306. Therefore, galvanic separation is not achieved.

Advantageously, when the operating temperature of the PPTC fuse 304 reaches a predetermined temperature, heat from the PPTC fuse 304 can melt a heat-sensitive element in the secondary fuse element 306. That is, the secondary fuse element 306 can open when the PPTC fuse 304 reaches the predetermined temperature, thereby providing a complete galvanic separation between the first terminal 310 and the second terminal 312.

FIG. 3C illustrates the current flow in the fuse module during such complete galvanic separation. As seen in FIG. 3C, the secondary fuse element 306 is open. For example, the thermal fuse 204 can melt, disintegrate, or otherwise open responsive to heat from the PPTC fuse 304. When the secondary fuse element 306 opens, the current 308 can flow through the PPTC fuse 304, but the current 308 cannot flow through the secondary fuse element 306. In particular, the current 308 can flow from the first terminal 310 to the PPTC fuse 304, through the PPTC fuse 304, and from the PPTC fuse 304 to the secondary fuse element 306, but cannot flow through the secondary fuse element 306 and, therefore, cannot reach the second terminal 312, thereby providing the complete galvanic separation between the first terminal 310 and the second terminal 312.

The predetermined temperature at which the heat from the PPTC fuse 304 melts the heat-sensitive element in the secondary fuse element 306 can be the trip temperature of the PPTC fuse 304. As such, the heat from the PPTC fuse 304 can melt the heat-sensitive element in the secondary fuse element 306 when the operating temperature of the PPTC fuse 304 reaches the trip temperature. That is, the secondary fuse element 306 can open when the PPTC fuse 304 reaches the trip temperature.

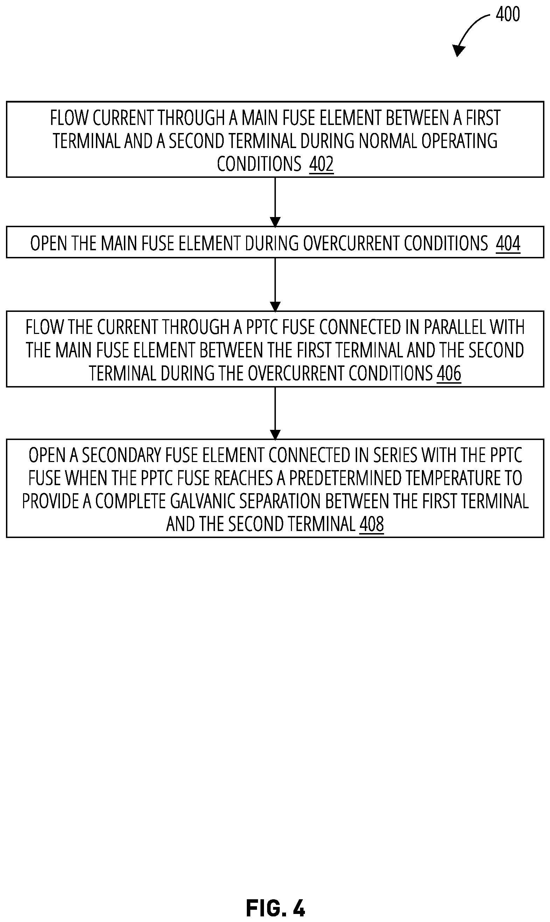

FIG. 4 is a flow diagram illustrating a method 400 in accordance with the disclosure. A fuse module illustrated by the circuit diagrams in FIG. 3A, FIG. 3B, and FIG. 3C can execute some or all of the method 400.

As seen, the method 400 can include flowing current through a main fuse element between a first terminal and a second terminal during normal operating conditions as in 402. For example, the current can flow through a pyrotechnic fuse 100.

The method 400 can also include opening the main fuse element during overcurrent conditions as in 404 and flowing the current through a PPTC fuse connected in parallel with the main fuse element between the first terminal and the second terminal during the overcurrent conditions as in 406. For example, the method 400 can include diverting the current from the main fuse element to the PPTC fuse during the overcurrent conditions.

Finally, the method 400 can include opening a secondary fuse element connected in series with the PPTC fuse when the PPTC fuse reaches a predetermined temperature as in 408, thereby providing a complete galvanic separation between the first terminal and the second terminal. For example, the method 400 can include increasing an operating temperature of the PPTC fuse as the current flows therethrough and melting a heat-sensitive element in the secondary fuse element with heat from the PPTC fuse when the operating temperature of the PPTC fuse reaches the predetermined temperature.

The method 400 can also include increasing a resistance of the PPTC fuse in a linear fashion as the operating temperature of the PPTC fuse increases below a trip temperature and increasing the resistance of the PPTC fuse in a non-linear fashion when the operating temperature of the PPTC fuse reaches the trip temperature. The method 400 can include limiting the current flowing through the PPTC fuse when the operating temperature of the PPTC fuse reaches the trip temperature.

The predetermined temperature can be the trip temperature. In particular, the method 400 can include melting the heat-sensitive element in the secondary fuse element with the heat from the PPTC fuse when the operating temperature of the PPTC fuse reaches the trip temperature.

As used herein, an element or a step recited in the singular and proceeded with the word "a" or "an" should be understood as not excluding plural elements or steps, unless such exclusion is explicitly recited.

It is intended that the present disclosure not be limited to the described examples, but that it has the full scope defined by the language of the following claims and equivalents thereof.

## Claims

1. A fuse module comprising:
a main fuse element;
a PPTC fuse connected in parallel with the main fuse element; and
a secondary fuse element connected in series with the PPTC fuse,
wherein current flows through the main fuse element during normal operating conditions,
wherein the main fuse element opens and the current flows through the PPTC fuse during overcurrent conditions until the PPTC fuse reaches a predetermined temperature, preferably a trip temperature, and
wherein the secondary fuse element opens when the PPTC fuse reaches the predetermined temperature, preferably the trip temperature.

2. The fuse module of claim 1, wherein the main fuse element includes a pyrotechnic fuse.

3. The fuse module of claim 1 or 2, wherein the secondary fuse element includes a thermal fuse.

4. The fuse module of any of the preceding claims, wherein the current is diverted from the main fuse element to the PPTC fuse during the overcurrent conditions.

5. The fuse module of any of the preceding claims, wherein the current flowing through the PPTC fuse increases an operating temperature of the PPTC fuse, wherein a resistance of the PPTC fuse increases in a linear fashion as the operating temperature of the PPTC fuse increases below the trip temperature, and wherein the resistance of the PPTC fuse increases in a non-linear fashion when the operating temperature of the PPTC fuse reaches the trip temperature.

6. The fuse module of claim 5, wherein the resistance of the PPTC fuse limits the current flowing therethrough when the operating temperature of the PPTC fuse reaches the trip temperature.

7. The fuse module of any of the preceding claims, wherein the current flowing through the PPTC fuse increases an operating temperature of the PPTC fuse, and wherein heat from the PPTC fuse melts a heat-sensitive element in the secondary fuse element when the operating temperature of the PPTC fuse reaches the trip temperature.

8. The fuse module of any of the preceding claims, further comprising:
a first terminal electrically coupled to the main fuse element and the PPTC fuse; and
a second terminal electrically coupled to the main fuse element and the secondary fuse element,
wherein the secondary fuse element opening provides a complete galvanic separation between the first terminal and the second terminal.

9. A fuse module comprising:
a main fuse element;
a PPTC fuse connected in parallel with the main fuse element; and
a secondary fuse element connected in series with the PPTC fuse,
wherein current flows through the main fuse element during normal operating conditions,
wherein the main fuse element opens and the current flows through the PPTC fuse during overcurrent conditions, and
wherein the secondary fuse opens when the PPTC fuse reaches a predetermined temperature, preferably wherein the current is diverted from the main fuse element to the PPTC fuse during the overcurrent conditions.

10. The fuse module of claim 9, wherein the current flowing through the PPTC fuse increases an operating temperature of the PPTC fuse, wherein a resistance of the PPTC fuse increases in a linear fashion as the operating temperature of the PPTC fuse increases below a trip temperature, and wherein the resistance of the PPTC fuse increases in a non-linear fashion when the operating temperature of the PPTC fuse reaches the trip temperature, preferably wherein the resistance of the PPTC fuse limits the current flowing therethrough when the operating temperature of the PPTC fuse reaches the trip temperature.

11. The fuse module of claim 9 or 10 with one or more of the following:
- wherein the current flowing through the PPTC fuse increases an operating temperature of the PPTC fuse, and wherein heat from the PPTC fuse melts a heat-sensitive element in the secondary fuse element when the operating temperature of the PPTC fuse reaches the predetermined temperature;
- further comprising:
a first terminal electrically coupled to the main fuse element and the PPTC fuse; and
a second terminal electrically coupled to the main fuse element and the secondary fuse element,
wherein the secondary fuse element opening provides a complete galvanic separation between the first terminal and the second terminal.

12. A method comprising:
flowing current through a main fuse element between a first terminal and a second terminal during normal operating conditions;
opening the main fuse element during overcurrent conditions;
flowing the current through a PPTC fuse connected in parallel with the main fuse element between the first terminal and the second terminal during the overcurrent conditions; and
opening a secondary fuse element connected in series with the PPTC fuse when the PPTC fuse reaches a predetermined temperature to provide a complete galvanic separation between the first terminal and the second terminal, preferably further comprising:
diverting the current from the main fuse element to the PPTC fuse during the overcurrent conditions.

13. The method of claim 12, further comprising:
increasing an operating temperature of the PPTC fuse as the current flows therethrough;
increasing a resistance of the PPTC fuse in a linear fashion as the operating temperature of the PPTC fuse increases below a trip temperature; and
increasing the resistance of the PPTC fuse in a non-linear fashion when the operating temperature of the PPTC fuse reaches the trip temperature.

14. The method of claim 13, further comprising limiting the current flowing through the PPTC fuse when the operating temperature of the PPTC fuse reaches the trip temperature, preferably further comprising:
melting a heat-sensitive element in the secondary fuse element with heat from the PPTC fuse when the operating temperature of the PPTC fuse reaches the predetermined temperature,
wherein the predetermined temperature is the trip temperature.

15. The method of any of the preceding claims 12-14, further comprising:
increasing an operating temperature of the PPTC fuse as the current flows therethrough; and
melting a heat-sensitive element in the secondary fuse element with heat from the PPTC fuse when the operating temperature of the PPTC fuse reaches the predetermined temperature.
